# FASCICULE DE BREVET EUROPEEN

(11) **EP 0 613 605 B1**
(45) Date de publication et mention de la délivrance du brevet: **04.03.1998**
(21) Numéro de dépôt: 93900262.2
(22) Date de dépôt: 19.11.1992
(51) Int. Cl.: H04N 5/073

(54) **PROCEDE DE SYNCHRONISATION DU CIRCUIT DE BALAYAGE D'UN APPAREIL DE VISUALISATION D'IMAGES**
Verfahren zur Synchronisation der Ablenkung in einem Bildwiedergabeapparat
PROCESS FOR SYNCHRONIZING THE SCANNING CIRCUIT OF AN IMAGE DISPLAY DEVICE

(30) Priorité: 20.11.1991 FR 9114316
(43) Date de publication de la demande: 07.09.1994
(73) Titulaire: FRANCE TELECOM, 75015 Paris (FR)
(72) Inventeur: GUICHARD, Jacques, F-75015 Paris (FR); EUDE, Gérard, F-77200 Torcy (FR)
(74) Mandataire: Signore, Robert
(86) Numéro de dépôt international: FR9201073
(87) Numéro de publication internationale: WO9310627

(56) Documents cités:
- EP-A- 0 360 026
- GB-A- 2 191 906
- US-A- 4 007 328
- US-A- 4 027 100
- US-A- 4 562 466
- US-A- 4 698 676
- US-A- 4 837 632
- PROCEEDINGS OF THE GLOBAL TELECOMMUNICATIONS CONFERENCE AND EXHIBITION - GLOBECOM vol. 2, Décembre 1985, NEW ORLEANS, USA pages 791 - 794 COCHENNEC ET AL 'ASYNCHRONOUS TIME-DIVISION NETWORKS : TERMINAL SYNCHRONIZATION FOR VIDEO AND SOUND SIGNALS'
- FERNSEH- UND KINO-TECHNIK vol. 29, no. 10, 1975, pages 328 - 330 OST ET AL 'Video-Konferenzsystem mit 2,048 Mbit/s'

## Description

L'invention concerne un procédé de synchronisation du circuit de balayage d'un appareil de visualisation d'images, lesdites images ayant été acquises par une caméra possédant un circuit de balayage piloté par une horloge d'acquisition donnée.

Le procédé s'applique aux appareils de visiophonie, de visioconférence, de télévision et de télésurveillance.

Dans une transmission vidéo analogique, des tops de synchronisation sont insérés régulièrement dans le signal image. Ils indiquent les débuts d'images et les débuts de lignes.

L'appareil de visualisation ou moniteur dans le cas de la visiophonie, se synchronise sur ces tops de référence, ce qui lui permet d'afficher le début d'image en haut à gauche et les débuts de lignes le long des bords gauches. Un signal vidéo analogique contient donc deux fréquences de référence, la fréquence ligne et la fréquence trame.

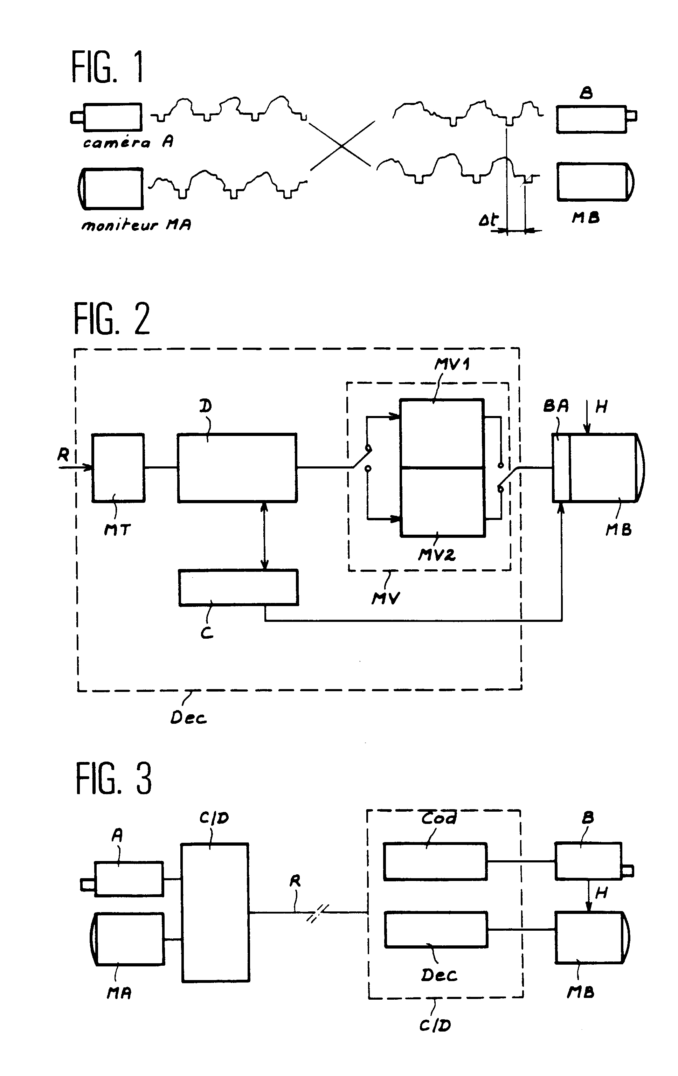

Toutefois, il a été remarqué dans le cas de la transmission de signaux analogiques sur réseau large bande pour la visiophonie qu'il y avait un défilement d'une ombre se superposant à la scène visualisée. En effet, dans la transmission analogique sur réseau large bande en visiophonie (Fig. 1), le signal vidéo issu de la caméra A parvient sans déformation majeure au moniteur B. De même, pour le signal issu de la caméra B vers le moniteur A. Les circuits de balayage du moniteur B se trouvent donc pilotés par le signal en provenance de la caméra A. Cependant, il n'y a aucune raison pour que les balayages de la caméra B soient identiques à ceux de la caméra A. Or, la caméra et le moniteur B d'un visiophone se trouvent situés très proches l'un de l'autre et les influences par rayonnement de leur circuit de balayage provoquent ce défilement. La vitesse de défilement correspond à l'écart de fréquence entre les deux balayages.

Dans le cas d'une transmission vidéo numérique où les signaux ont été comprimés par un codeur pour être transmis, ces fréquences lignes et trames ne sont plus transmises en tant que motifs réguliers périodiques.

En éliminant les redondances spatiales et temporelles par des techniques connues de compression d'images, le nombre de bits par image devient variable.

Des mots de codes caractérisant les débuts d'images sont bien transmis, mais ils ne sont plus séparés par des durées égales et ne constituent plus un rythme sur lequel l'appareil de réception peut se synchroniser. La synchronisation ligne, elle, peut ne plus être du tout transmise.

L'appareil de réception qui va permettre de visualiser ces images comporte un décodeur qui permet de reconstruire les images à l'origine comprimées, de manière à enregistrer ces images entières dans des moyens de mémorisation de visualisation mais à des instants variables qui dépendent du nombre de bits transmis par image et de la puissance du décodeur.

Les problèmes de synchronisation du balayage n'ont par conséquent pas été résolus jusqu'à présent de façon efficace.

La présente invention permet de résoudre ces problèmes. La présente invention a plus particulièrement pour objet un procédé de synchronisation permettant d'avoir un système de balayage de l'appareil asynchrone, indépendant de la synchronisation des images qu'il reçoit et non perturbé par une base de temps d'un autre système de balayage qui se trouverait à proximité de ce dernier.

La présente invention a plus particulièrement pour objet un procédé de synchronisation du circuit de balayage (BA) d'un appareil de visualisation d'images (MB) comprenant une mémoire tampon d'entrée (MT), des moyens de traitement (D) permettant de reconstituer chaque image arrivant dans la mémoire tampon (MT), des moyens de mémorisation de visualisation (MV) dans lesquels les images sont enregistrées après traitement et des moyens de commande (C) aptes à piloter l'écriture ou la lecture des images dans ces moyens de mémorisation de visualisation, ces images étant acquises par une caméra possédant un circuit de balayage piloté par une horloge d'acquisition donnée, caractérisé en ce que, le nombre de bits générés par image acquise par la caméra étant variable, ledit procédé est tel que :
- on vide la mémoire tampon d'entrée en permanence ;
- on applique au circuit de balayage de l'appareil de visualisation d'image un signal d'horloge arbitraire, indépendant de la synchronisation image du signal reçu ;
- on gère la lecture et l'écriture des moyens de mémorisation de visualisation pour obtenir des répétitions ou des suppressions d'images à la visualisation, de manière à absorber toute différence de fréquence entre l'horloge de synchronisation de l'appareil et une autre horloge indépendante ;
- on utilise une décompression d'image rapide de manière à ne pas perturber l'ensemble des mécanismes d'écriture-lecture.

Selon une deuxième caractéristique, le procédé consiste à diviser les moyens de mémorisation de visualisation en au moins deux zones de mémorisation, à commander le traitement d'une image I au fur et à mesure que cette image est enregistrée dans la mémoire d'entrée, à commander l'enregistrement de cette image I au fur et à mesure de son traitement dans l'une des zones de mémorisation, puis soit :
- à n'autoriser la lecture de la zone dans laquelle cette image a été enregistrée que si le traitement d'une nouvelle image est terminé, sinon à commander une nouvelle lecture du contenu de l'autre zone et à n'autoriser le traitement d'une nouvelle image que lorsque le basculement d'une zone à l'autre a été fait ; soit, le traitement d'une image étant terminé :
- à poursuivre la lecture de l'autre zone contenant une image déjà enregistrée de manière à lire une fois de plus que les autres cette image ; soit :
- à commander la lecture de cette première zone de manière à visualiser l'image enregistrée qui vient d'être traitée et visualiser une fois de moins que les autres une image précédemment traitée et enregistrée dans l'autre zone.

Selon une autre caractéristique, le procédé consiste dans le cas où l'horloge d'acquisition est moins rapide que l'horloge de visualisation, à commander la lecture d'une image enregistrée dans l'une des zones de manière à visualiser cette image plusieurs fois jusqu'à ce que l'image suivante soit traitée et enregistrée dans l'autre zone.

Selon une autre caractéristique, le procédé consiste dans le cas où l'horloge d'acquisition est plus rapide que l'horloge de visualisation à choisir des moyens de traitement plus rapides que nécessaire aptes à traiter les données d'une image au fur et à mesure qu'elles arrivent dans la mémoire tampon d'entrée, à choisir un seuil de remplissage de la mémoire tampon et à supprimer la lecture d'au moins une image, l'image ayant pu être visualisée une ou plusieurs fois ou pas du tout dès que le seuil est dépassé.

Lorsque l'appareil est un visiophone à bas débit, une image acquise sur n est seulement transmise et les moyens de commande sont aptes à commander la visualisation de n fois la même image pendant que les moyens de traitement traitent l'image suivante. Le procédé consiste alors, selon une autre caractéristique, à choisir des moyens de traitement aptes à traiter une image pendant la durée de visualisation de p images, p étant inférieur à n, l'image traitée étant alors enregistrée et sa visualisation commandée après visualisation de p fois l'image précédente.

Dans le cas d'une application au visiophone, le procédé consiste à prendre comme horloge arbitraire l'horloge de balayage de la caméra proche du moniteur.

Lorsque l'appareil est un système de visioconférence ou un poste de télévision ou un visiophone à haut débit, toutes les images acquises sont transmises, le procédé consiste alors à choisir des moyens de traitement aptes à traiter une image pendant la durée de visualisation d'une autre image et dès qu'un seuil prédéterminé de remplissage de la mémoire tampon d'entrée est dépassée par l'arrivée d'une image I, à autoriser le traitement de l'image suivante I+1, l'image I n'étant pas visualisée, la visualisation de l'image I+1 se faisant juste après la visualisation de l'image I-1.

Dans le cas d'un système de visioconférence ou d'un poste de télévision ou d'un visiophone à haut débit dans lesquels les moyens de traitement n'ont pas la puissance voulue permettant de traiter une image pendant la durée de visualisation d'une autre image, le procédé consiste alors, dès qu'un seuil prédéterminé de remplissage de la mémoire tampon d'entrée est dépassé par l'arrivée d'une image I, à commander la répétition de la visualisation de l'image I pendant que se fait le traitement de l'image I+k, les k-1 images intermédiaires n'étant pas visualisées, et l'image i+k étant visualisée juste après son traitement.

D'autres particularités et avantages de la présente invention apparaîtront à la lecture de la description suivante qui est faite à titre indicatif mais non limitatif et en regard des dessins sur lesquels :
- la figure 1 représente un système de transmission de signaux à partir d'un réseau analogique dans le cadre d'une application visiophonique,
- la figure 2 représente le schéma d'un dispositif de traitement et plus particulièrement du décodeur d'images numériques de l'appareil de visualisation MB et transmises par un réseau R,
- la figure 3 illustre de façon schématique un système visiophonique permettant de mettre en oeuvre le procédé dans cette application.

La figure 1 a déjà été décrite à propos de l'état de la technique.

La figure 2 représente le schéma d'un decodeur Dec relié au circuit de balayage BA d'un appareil de visualisation MB.

Il est inutile dans ce qui suit de rentrer dans les détails de la description du circuit de balayage BA de l'appareil MB, qu'il s'agisse d'un visiophone ou d'un poste de télévision car ces circuits sont bien connus de l'homme de métier. Il est inutile également de décrire dans le détail le décodeur, en ce qui concerne les moyens de décompression D, les circuits d'accès à la mémoire tampon d'entrée MT et les circuits d' adressages en lecture et écriture de la mémoire de visualisation MV, même si cette dernière a été divisée conformément à l'invention en au moins deux zones d'adressage distinctes, les techniques d'adressage de deux ou plusieurs zones distinctes dans une mémoire relevant de techniques connues.

On pourra se reporter à la publication de brevet EP-A2-0 123 456 pour plus de détails sur les codeurs/décodeurs, et en particulier les décodeurs munis d'un circuit de décompression tel qu'utilisé dans des appareils comme le visiophone ou les circuits de traitement de signaux de télévision.

Pour la suite de la description on pourra se reporter aux schémas des figures 2 ou 3.

Les images qui arrivent à l'entrée du décodeur Dec par le réseau R arrivent à un débit donné qui est soit de 64 Kbit/s, soit 48 Kbit/s, pour les réseaux à très bas débit de type RNIS ou à d'autres débits, plus élevés, constants ou variables.

Le nombre de bits par image est variable du fait des traitements de compression réalisés par un codeur à l'émission.

Dès leur arrivée, les informations de chaque image sont enregistrées dans la mémoire tampon MT. Une caractéristique du procédé consiste à vider cette mémoire MT en permamence, de manière à ce que des retards qui pourraient être introduits par le transit des informations dans leur mémoire soit le plus faible possible.

En pratique, un seuil de remplissage est défini pour un débit donné. On prendra par exemple un seuil légèrement supérieur à 1200 bits lorsque le débit d'entrée est à 64 Kbit/s, de manière à ce que l'attente entre la fin du traitement d'image et sa visualisation ne dépasse pas la durée d'une image.

Ce seuil de remplissage est surveillé par les moyens de commande C du décodeur Dec.

Les moyens de commande C pourront être réalisés de façon pratique par un processeur existant du décodeur ou par un processeur que l'on aura rajouté.

Le processeur est chargé par le programme mettant en oeuvre les différentes commandes d'adressage en lecture ou en écriture des mémoires et de traitement des informations par le décodeur conformément au procédé décrit.

Comme décrit précédemment, les informations lues dans la mémoire MT sont décompressées par le décompresseur D et mémorisées dans une mémoire de visualisation MV.

Cette mémoire a été divisée en au moins deux zones de mémorisation distinctes MV1 et MV2 que l'on appelle mémoire dans la suite. Deux mémoires pourraient également être utilisées à cet effet. Chaque zone a au moins la taille d'une image complète.

Les mémoires MV1 et MV2 fonctionnent en "flip-flop", c'est-à-dire que l'appareil visualise le contenu de MV1 pendant que le décompresseur remplit MV2 avec l'image suivante puis inversement.

Les moyens de commande C permettent de piloter l'adressage en lecture et écriture des deux mémoires MV1 et MV2 de la façon indiquée dans ce qui suit.

Les moyens de commande C n'autorisent une lecture de MV2 pour la visualisation que si le décompresseur D a terminé le décodage d'une nouvelle image, sinon il commande une nouvelle lecture du contenu de MV1.

Les moyens de commande C n'autorisent le décompresseur D à commencer le décodage d'une nouvelle image (cette étape débutant par la lecture du contenu de la mémoire tampon MT) que lorsqu'il a commandé le basculement de MV1 vers MV2 ou vice versa.

On choisit le décompresseur suffisamment puissant pour réaliser les traitements rapidement, afin de ne pas perturber l'ensemble des mécanismes de lecture et écriture, tels que proposés par le procédé. Des décompresseurs permettant d'obtenir la puissance de calcul requise existent sur le marché.

Comme cela a été dit, le procédé de synchronisation consiste en premier lieu à prendre une horloge pour le circuit de balayage de l'appareil de visualisation qui soit arbitraire, indépendante des signaux de synchronisation image transmis.

Dans les applications visiophoniques, on choisit préférentiellement comme horloge, l'horloge de balayage de la caméra qui se trouve dans l'appareil proche du moniteur de visualisation (Cf. figure 3).

Cependant, dans la plupart des cas, l'horloge de la caméra d'acquisition n'a pas exactement la même fréquence que celle de l'horloge de synchronisation de l'appareil.

Deux cas se présentent en effet. Ces cas vont être décrits à partir de l'application du procédé à la visiophonie (Fig. 3).

**1er CAS** : l'horloge de la caméra d'acquisition A est moins rapide que l'horloge de balayage de la caméra B.

Dans ce cas, la caméra A produit moins d'images que la caméra B. Le moniteur MB a tendance à vouloir visualiser plus d'images qu'il n'en arrive. La mémoire tampon MT va se vider périodiquement et les moyens de commande vont selon le procédé commander alors la lecture de la mémoire MV1 ou MV2, de manière à visualiser au moins une fois de plus que les autres la même image de façon à laisser aux informations le temps d'arriver dans la mémoire tampon. Dans la séquence d'image restituée, il y aura une image de plus que dans la séquence de départ. En effet, une des images sera répétée deux fois ou une fois de plus que les autres.

En pratique, la différence entre les horloges de A et de B sera faible (d'autant plus si les horloges sont fabriquées à partir de quartz). Cette répétition se produit si peu souvent qu'elle n'est pratiquement pas visible.

**2ème CAS** : l'horloge de la caméra d'acquisition A est plus rapide que l'horloge de balayage de la caméra B.

Dans ce cas, symétrique du précédent, la caméra A produit plus d'images que le moniteur B ne peut en visualiser. Cela a pour conséquence une augmentation des informations en attente dans la mémoire tampon MT (côté moniteur B). Comme cette dernière n'est pas de taille infinie, tôt ou tard elle finit par déborder. Pour éviter cela, on pourrait augmenter la taille de la mémoire tampon MT. Cependant, il est préférable de ne pas le faire car cela introduirait un retard supplémentaire pour les informations, retard dû au temps de transit par cette mémoire.

C'est pourquoi, pour résoudre ce problème avantageusement, on choisit un décompresseur ayant une puissance de calcul qui permette de décoder une image plus rapidement que nécessaire (temps moyen d'une image).

On choisit également un seuil de remplissage de la mémoire tampon tel que décrit précédemment et lorsque le seuil est dépassé, le décompresseur traite plus tôt l'image suivante, la précédente sera visualisée un nombre réduit de fois ou ne sera pas visualisée du tout.

Deux cas se présentent à nouveau : soit toutes les images sont traitées, soit le système (codeur-décodeur) fonctionne en mode de sous-échantillonnage temporel (c'est le cas pour l'application visiophonique à très bas débit).

### Mode sous-échantillonné (visiophone à très bas débit)

Cela signifie que toutes les images acquises ne sont pas traitées par le codeur. Par exemple, dans un mode de fonctionnement à 10 Hz, une trame sur cinq est codée. Si la suite des nombres représente les images issues de la caméra A :
1 2 3 4 5 6 7 8 9 10 11 12 13 14 15 16.... le codeur A ne compresse que les images
1 6 11 16....etc...

Le décodeur B ne décompressera également que les images 1, 6, 11, 16 etc. Le système de visualisation répète cinq fois la même image et la séquence visualisée à l'allure suivante :
1 1 1 1 1 6 6 6 6 6 11 11 11 11 11 16 16 16 16 16...... Dans ce mode de fonctionnement visiophonique, le moniteur B visualise cinq fois l'image 1 (inscrite dans MV1) pendant que le décompresseur décode et écrit le résultat de son décodage (l'image 6) dans MV2.

Pour rattraper le retard dû à la lenteur du balayage du moniteur B, on choisit donc un décodeur plus puissant que nécessaire, de manière à ce qu'il permette par exemple d'avoir terminé le décodage de l'image 6 dans un temps correspondant à la visualisation de quatre fois l'image 1. Cela est possible parce que la dérive d'horloge fait que les informations correspondant à l'image 6 se sont accumulées dans la mémoire MT. L'image 1 ne sera alors répétée que quatre fois et la séquence visualisée possèdera une image de moins que la séquence de départ issue de la caméra A
1 1 1 1 6 6 6 6 6 11 11 11 11 11 16 16 16 16 16....

L'opération est répétée dès que le contenu de la mémoire tampon MT réaugmente.

Il n'y a pas d'inconvénient de principe à avoir un décodeur très rapide car il s'arrête de toute façon lorsque la mémoire MT est vide.

### Mode sans sous-échantillonnage temporel (visioconférence, télévision, visiophonie à des débits supérieurs)

La séquence à visualiser est donc
1 2 3 4 5 6 7 8 9 10 11 12 13 14 15 16.....

La solution idéale consiste à mettre en oeuvre un décompresseur ayant une puissance de calcul deux fois plus rapide que nécessaire.

Si l'on admet par exemple que l'image 5 corresponde au moment où la mémoire tampon MT dépasse le seuil limite : le décodeur est autorisé par les moyens de commande à décoder l'image 6 immédiatement. Cette dernière est écrite dans la demi-mémoire qui contenait l'image 5, venant effacer celle-ci. La séquence visualisée est donc
1 2 3 4 6 7 8 9 10 11 12 13 14 15 16....

Le retard est ainsi rattrapé.

Dans le cas où la puissance de calcul du décodeur n'atteint pas le double de la valeur normale, des configurations intermédiaires peuvent apparaître
1 2 3 4 4 7 8 9 10 11...... ou
1 2 3 4 4 4 8 9 10 11......

Elles permettent bien de rattraper le retard mais impliquent la répétition de certaines images et la suppression d'autres.

Des mémoires annexes en complément de MV1 et MV2 (MV3 non représentée) permettent dans ce cas de ne pas réécrire et donc de ne pas effacer plusieurs images. Une seule image perdue est suffisante.

## Revendications

1. Procédé de synchronisation du circuit de balayage (BA) d'un appareil de visualisation d'images (MB) comprenant une mémoire tampon d'entrée (MT), des moyens de traitement (D) permettant de reconstituer chaque image arrivant dans la mémoire tampon (MT), des moyens de mémorisation de visualisation (MV) dans lesquels les images sont enregistrées après traitement et des moyens de commande (C) aptes à piloter l'écriture ou la lecture des images dans ces moyens de mémorisation de visualisation, ces images étant acquises par une caméra possédant un circuit de balayage piloté par une horloge d'acquisition donnée, caractérisé en ce que, le nombre de bits générés par image acquise par la caméra étant variable, ledit procédé est tel que :
- on vide la mémoire tampon d'entrée en permanence ;
- on applique au circuit de balayage de l'appareil de visualisation d'image un signal d'horloge arbitraire, indépendant de la synchronisation image du signal reçu ;
- on gère la lecture et l'écriture des moyens de mémorisation de visualisation pour obtenir des répétitions ou des suppressions d'images à la visualisation, de manière à absorber toute différence de fréquence entre l'horloge de synchronisation de l'appareil et une autre horloge indépendante ;
- on utilise une décompression d'image rapide de manière à ne pas perturber l'ensemble des mécanismes d'écriture-lecture.

2. Procédé de synchronisation selon la revendication 1, caractérisé en ce que :
- on divise les moyens de mémorisation de visualisation en au moins deux zones de mémorisation ayant chacune au moins la taille d'une image complète ;
- on commande le traitement d'une image I au fur et à mesure que cette image est enregistrée dans la mémoire d'entrée, on commande l'enregistrement de cette image I au fur et à mesure de son traitement dans l'une des zones de mémorisation, puis soit :
- on n'autorise la lecture de la zone dans laquelle cette image a été enregistrée que si le traitement d'une nouvelle image est terminé, sinon on commande une nouvelle lecture du contenu de l'autre zone et on n'autorise le traitement d'une nouvelle image que lorsque le basculement d'une première zone à l'autre a été fait ; soit, le traitement d'une image étant terminé :
- on poursuit la lecture de l'autre zone contenant une image déjà enregistrée de manière à lire une fois de plus que les autres cette image ; soit :
- on commande la lecture de la première zone de manière à visualiser l'image enregistrée qui vient d'être traitée et visualiser une fois de moins que les autres une image précédemment traitée et enregistrée dans l'autre zone.

3. Procédé de synchronisation selon la revendication 2, caractérisé en ce qu'il consiste dans le cas où l'horloge d'acquisition est moins rapide que l'horloge de visualisation, à commander la lecture d'une image enregistrée dans l'une des zones de manière à visualiser cette image plusieurs fois jusqu'à ce que l'image suivante soit traitée et enregistrée dans l'autre zone.

4. Procédé de synchronisation selon les revendications 1 ou 2, caractérisé en ce qu'il consiste dans le cas où l'horloge d'acquisition est plus rapide que l'horloge de visualisation, à choisir des moyens de traitement aptes à traiter les données d'une image au fur et à mesure qu'elles arrivent dans la mémoire tampon d'entrée, à choisir un seuil de remplissage de la mémoire tampon et à supprimer la lecture d'au moins une image, l'image ayant pu être visualisée une ou plusieurs fois ou pas du tout dès que le seuil est dépassé.

5. Procédé de synchronisation selon la revendication 4 dans lequel l'appareil est un visiophone à bas débit, une image acquise sur n étant seulement transmise, caractérisé en ce qu'il consiste à traiter une image pendant la durée de visualisation de p images, p étant inférieur à n, l'image traitée étant alors enregistrée et sa visualisation commandée après visualisation de p fois l'image précédente.

6. Procédé de synchronisation selon la revendication 5, le visiophone comportant un moniteur de visualisation et une caméra, caractérisé en ce qu'il consiste à prendre comme horloge arbitraire l'horloge de balayage de ladite caméra.

7. Procédé de synchronisation selon la revendication 4 dans lequel l'appareil est un système de visioconférence ou de visiophonie à haut débit ou un poste de télévision, dans lequel toutes les images acquises sont transmises, caractérisé en ce qu'il consiste à traiter une image pendant la durée de visualisation d'une autre image et en ce que, dès qu'un seuil prédéterminé de remplissage de la mémoire tampon d'entrée est dépassé par l'arrivée d'une image l, il consiste à autoriser le traitement de l'image suivante l+1, l'image l n'étant pas visualisée, la visualisation de l'image l+1 se faisant juste après la visualisation de l'image l-1.

8. Procédé de synchronisation selon la revendication 4 dans lequel l'appareil est un système de visioconférence ou un poste de télévision, dans lequel toutes les images acquises sont transmises, caractérisé en ce que, dès qu'un seuil prédéterminé de remplissage de la mémoire tampon d'entrée est dépassé par l'arrivée d'une image l, il consiste à commander la répétition de la visualisation de l'image l pendant que se fait le traitement de l'image l+k, les k-1 images intermédiaires n'étant pas visualisées et l'image l+k étant visualisée juste après son traitement.

9. Procédé de synchronisation selon l'une quelconque des revendications 4, 7 et 8, caractérisé en ce que le seuil de remplissage est choisi en fonction du débit des informations arrivant à l'entrée du décodeur, de manière à ce que l'attente entre la fin du traitement d'une image et sa visualisation ne dépasse pas la durée d'une image.

## Patentansprüche

1. Verfahren zur Synchronisation der Ablenkung (BA) in einem Bildwiedergabeapparat (MB), umfassend einen Eingang-Pufferspeicher (MT), Verarbeitungseinrichtungen (D) zur Wiederherstellung jedes in dem Pufferspeicher (MT) eintreffenden Bildes, Anzeigespeicherungseinrichtungen (MV), in denen die Bilder nach der Verarbeitung gespeichert werden, und Steuereinrichtungen (C), um das Auslesen oder das Einschreiben der Bilder in den Anzeigespeicherungseinrichtungen zu steuern, wobei diese Bilder aufgenommen werden durch eine Kamera mit einer Abtastschaltung, die durch einen bestimmten Aufnahmetakt gesteuert wird,
**dadurch gekennzeichnet**,
wobei die Anzahl der erzeugten Bits pro durch die Kamera aufgenommenes Bild variabel ist, daß das genannte Verfahren die folgenden Schritte umfaßt:
- man leert den Eingang-Pufferspeicher permanent;
- man legt an die Abtastschaltung des Bildwiedergabeapparats ein arbiträres Taktsignal, unabhängig von der Bildsynchronisation des empfangenen Signals;
- man verwaltet das Einlesen und das Ausschreiben der Anzeigespeicherungseinrichtungen, um bei der Anzeige Bilder zu wiederholen oder wegzulassen, um jeden Frequenzunterschied zwischen dem Synchronisationstakt des Apparats und einem anderen, unabhängigen Takt zu absorbieren;
- man benutzt eine schnelle Bild-Dekompression, um die Gesamtheit der Schreib-Lese-Mechanismen nicht zu stören.

2. Synchronisationsverfahren nach Anspruch 1, dadurch gekennzeichnet, daß:
- man die Anzeigespeicherungseinrichtungen in wenigstens zwei Speicherungszonen unterteilt, von denen jede die Größe eines kompletten Bildes hat;
- man die Verarbeitung eines Bildes I in dem Maße durchführt, wie dieses Bild in dem Eingang-Pufferspeicher aufgezeichnet wird, man die Abspeicherung dieses Bildes I in dem Maße steuert, wie es in einer der Speicherungszonen verarbeitet wird, dann entweder:
- man das Lesen der Zone, in der dieses Bild aufgezeichnet wurde, nur zuläßt, wenn die Verarbeitung eines neuen Bildes beendet ist, andernfalls man eine neue Lektüre des Inhalts der anderen Zone befiehlt, und man die Verarbeitung eines neuen Bildes nur zuläßt, wenn das Kippen bzw. Umschalten von einer ersten Zone zu der anderen erfolgt ist, oder, sofern die Verarbeitung eines Bildes beendet ist:
- man die Lektüre der anderen, ein schon aufgezeichnetes Bild enthaltenden Zone fortsetzt, um dieses Bild einmal mehr als die anderen zu lesen; oder:
- man die Lektüre der ersten Zone steuert, um das aufgezeichnete Bild anzuzeigen, das soeben verarbeitet wurde, und ein vorhergehend in der anderen Zone verarbeitetes und aufgezeichnetes Bild einmal weniger als die anderen anzuzeigen.

3. Synchronisationsverfahren nach Anspruch 2, dadurch gekennzeichnet, daß es für den Fall, wo der Empfangstakt weniger schnell ist als der Anzeigetakt, darin besteht, das mehrmalige Lesen eines in einer der Zonen aufgezeichneten Bildes zu steuern, um dieses Bild mehrmals anzuzeigen, bis das nachfolgende Bild verarbeitet und in der anderen Zone aufgezeichnet ist.

4. Synchronisationsverfahren nach Anspruch 1 oder 2, dadurch gekennzeichnet, daß es für den Fall, wo der Empfangstakt weniger schnell ist als der Anzeigetakt darin besteht, Verarbeitungseinrichtungen zu wählen, die die Daten eines Bildes in dem Maße verarbeiten können, wie diese in dem Eingang-Pufferspeicher eintreffen, einen Auffüll-Schwellenwert des Pufferspeichers zu wählen und das Lesen von wenigstens einem Bild zu unterdrücken, wobei das Bild einmal oder mehrmals angezeigt worden sein kann oder überhaupt nicht, sobald der Schwellenwert überschritten ist.

5. Synchronisationsverfahren nach Anspruch 4, wobei der Apparat ein Bildtelefon mit niedriger Datenrate ist, bei dem nur eines von n aufgenommenen Bilder übertragen wird, dadurch gekennzeichnet, daß es darin besteht, ein Bild während der Anzeigedauer von p Bildern zu verarbeiten, wobei p kleiner als n ist, und das verarbeitete Bild dann aufgezeichnet und seine Anzeige gesteuert wird nach p-maliger Anzeige des vorhergehenden Bilds.

6. Synchronisationsverfahren nach Anspruch 5, wobei das Bildtelefon einen Bildschirm und eine Kamera umfaßt, dadurch gekennzeichnet, daß es darin besteht, als arbiträren Takt den Abtasttakt der Kamera zu nehmen.

7. Synchronisationsverfahren nach Anspruch 4, wobei der Apparat ein Bildkonferenz- oder Bildtelefonsystem mit hoher Datenrate oder ein Fernsehgerät ist, bei dem alle aufgenommenen Bilder übertragen werden, dadurch gekennzeichnet, daß es darin besteht, ein Bild während der Anzeigedauer eines anderen Bildes zu verarbeiten, und dadurch, daß es, sobald ein festgelegter Auffüll-Schwellenwert des Eingang-Pufferspeichers durch das Eintreffen eines Bildes I überschritten wird, darin besteht, die Verarbeitung des nachfolgenden Bildes I+1 zuzulassen, das Bild I nicht anzuzeigen und das Bilds I+1 direkt nach dem Bild I-1 anzuzeigen.

8. Synchronisationsverfahren nach Anspruch 4, wobei der Apparat ein Bildkonferenzsystem oder ein Fernsehgerät ist, bei dem alle aufgenommenen Bilder übertragen werden, dadurch gekennzeichnet, daß es, sobald ein festgelegter Auffüll-Schwellenwert des Eingang-Pufferspeichers durch das Eintreffen eines Bildes I überschritten wird, darin besteht, die Wiederholung der Anzeige des Bildes I zu steuern, während die Verarbeitung des Bildes I+k durchgeführt wird, wobei die k-1 Zwischenbilder nicht angezeigt werden und das Bild k+1 direkt nach seiner Verarbeitung angezeigt wird.

9. Synchronisationsverfahren nach einem der Ansprüche 4, 7 und 8, dadurch gekennzeichnet, daß der Auffüll-Schwellenwert gewählt wird in Abhängigkeit von der Menge der am Eingang des Decodierers eintreffenden Daten, so daß das Warten zwischen dem Ende der Verarbeitung eines Bildes und seiner Anzeige nicht die Dauer eines Bildes überschreitet.

## Claims

1. Process for the synchronization of the scanning circuit (BA) of an image display device (MB) comprising an input buffer store (MT), processing means (D) making it possible to reconstitute each image arriving in the buffer store (MT), display storage means (MV) in which the images are recorded after processing and control means (C) able to control the writing or reading of images into said display storage means, said images being acquired by a camera having a scanned circuit controlled by a given acquisition clock, characterized in that the number of bits generated by the image acquired by the camera is variable, said process being such that there is a permanent emptying of the input buffer store, to the scanning circuit of the image display device is applied an arbitrary clock signal independent of the image synchronization of the signal received, the reading and writing of the display storage means are controlled in order to obtain image repetitions or blankings on display, so as to absorb any frequency difference between the synchronization clock of the device and another independent clock, use being made of a rapid image decompression so as not to disturb all the writing-reading mechanisms.

2. Synchronization process according to claim 1, characterized in that it consists of subdividing the display storage means into at least two storage fields, controlling the processing of an image I as said image is recorded in the input memory, controlling the recording of said image I during its processing in one of the storage fields, and then either:
only authorizing the reading of the field in which said image has been recorded if the processing of a new image has ended, otherwise controlling a new reading of the content of the other field and only authorizing the processing of a new image when the switching from one field to the other has taken place; or, with the processing of an image ended:
continuing the reading of the other field containing an already recorded image in such a way as to read said image once more than the others; or
controlling the reading of said first field so as to display the recorded image which has been processed and display once less than the others an image previously processed and recorded in the other field.

3. Synchronization process according to claims 1 or 2, characterized in that it consists in the case where the acquisition clock is slower than the display clock, controlling the reading of an image recorded in one of the fields so as to display said image several times until the following image has been processed and recorded in the other field.

4. Synchronizing process according to claims 1 or 2, characterized in that it consists in the case where the acquisition clock is faster than the display clock, choosing processing means which are faster than necessary able to process the data of an image as they enter the input buffer, choosing a buffer filling threshold and suppressing the reading of at least one image, whereby the image may have been displayed one or more times or not at all on exceeding the threshold.

5. Synchronizing process according to claim 4, in which the device is a low rate videophone, an image acquired from among n only is transmitted, the control means being able to control the display of n times the same image whilst the processing means process the following image, characterized in that it consists of choosing processing means able to process an image throughout the display time of p images, p being smaller than n, the processed image then being recorded and its display controlled after the display of p times the preceding image.

6. Synchronizing process according to claim 5, the videophone having a display monitor and a camera, characterized in that it consists of taking as the arbitrary clock the scanning clock of said camera.

7. Synchronizing process according to claim 4, in which the device is a videophone conference or high rate videophone system or a television set, in which all the acquired images re transmitted, characterized in that it consists of choosing processing means able to process an image during the display time of another image and in that as soon as a predetermined input buffer filling threshold is exceeded by the arrival of an image I, the control means authorize the processing of the following image I+1, the image I not being displayed, the display of the image I+1 taking place just after the display of the image I-1.

8. Synchronizing process according to claim 4, in which the device is a videophone conference system or a television set, in which all the acquired images are transmitted, characterized in that as soon as a predetermined input buffer filling threshold is exceeded by the arrival of an image I, the control means control the repetition of the display of the image I during the processing of the image I+k, the k-1 intermediate images not being displayed and the image I+k being displayed just after its processing.

9. Synchronizing process according to any one of the claims 4, 7 and 8, characterized in that the filling threshold is chosen as a function of the information rate arriving at the decoder input, so that the wait between the end of the processing of an image and its display does not exceed the duration of one image.
